# EUROPÄISCHE PATENTSCHRIFT

(11) **EP 2 016 111 B1**
(45) Veröffentlichungstag und Bekanntmachung des Hinweises auf die Patenterteilung: **22.09.2010**
(21) Anmeldenummer: 07727714.3
(22) Anmeldetag: 03.04.2007
(51) Int. Cl.: C08G 18/32

(54) **HYPERVERZWEIGTE POLYURETHANE, VERFAHREN ZU IHRER HERSTELLUNG SOWIE IHRE VERWENDUNG**
HYPER-BRANCHED POLYURETHANES METHOD FOR PRODUCTION AND USE THEREOF
POLYURÉTHANES HYPERRAMIFIÉS, LEUR PROCÉDÉ DE PRODUCTION ET UTILISATION

(30) Priorität: 09.05.2006 DE 102006021779
(43) Veröffentlichungstag der Anmeldung: 21.01.2009
(73) Patentinhaber: Evonik Degussa GmbH, 45128 Essen (DE)
(72) Erfinder: SEILER, Matthias, 64347 Griesheim (DE); BERNHARDT, Stefan, 63075 Offenbach (DE); SCHWARZ, Markus, 45721 Haltern am See (DE); SCHMIDT, Friedrich, Georg, 45721 Haltern am See (DE); FREITAG, Werner, 46286 Dorsten (DE)
(86) Internationale Anmeldenummer: PCT/EP2007/053243
(87) Internationale Veröffentlichungsnummer: WO 2007/128629

(56) Entgegenhaltungen:
- EP-A1- 1 026 185
- WO-A-02/36695

## Beschreibung

Die vorliegende Erfindung betrifft hyperverzweigte Polyurethane, Verfahren zu ihrer Herstellung sowie ihre Verwendung.

Hyperverzweigte Polymere sind bereits bekannt. C. Gao Hyperbranched polymers: from synthesis to applications Prog. Polym. Sci. 29 (2004) 183-275 fasst den gegenwärtigen Stand der Technik auf diesem Gebiet zusammen und beschäftigt sich insbesondere mit den verschiedenen Synthesevarianten und den unterschiedlichen Anwendungsgebieten von hyperverzweigten Polymeren. Dabei wird u. a. die Verwendung von Isophorondiisocyanat zur Herstellung von hyperverzweigten Polyurethanen diskutiert.

EP 1,026,185 A1 offenbart ein Verfahren zur Herstellung von dendritischen oder hochverzweigten Polyurethanen durch Umsetzung von Diisocyanaten und/oder Polyisocyanaten mit Verbindungen mit mindestens zwei mit Isocyanaten reaktiven Gruppen, wobei mindestens einer der Reaktionspartner funktionelle Gruppen mit gegenüber dem anderen Reaktionspartner unterschiedlicher Reaktivität aufweist und die Reaktionsbedingungen so gewählt werden, dass bei jedem Reaktionsschritt jeweils nur bestimmte reaktive Gruppen miteinander reagieren.

Bevorzugte Isocyanate umfassen u. a. aliphatische Isocyanate, wie Isophorondiisocyanat. Als Beispiele für die Verbindungen mit mindestens zwei mit Isocyanaten reaktiven Gruppen werden Propylenglykol, Glycerin, Mercaptoethanol, Ethanolamin, N-Methylethanolamin, Diethanolamin, Ethanolpropanolamin, Dipropanolamin, Diisopropanolamin, 2-Amino-1,3-propandiol, 2-Amino-2-methyl-1,3-propandiol und Tris(hydroxymethyl)-aminomethan namentlich genannt.

Die durch das Verfahren erhältlichen Polyurethane sollen als Vernetzer für Polyurethane oder als Baustein für andere Polyadditions- oder Polykondensationspolymere, als Phasenvermittler, Thixotropiermittel, Nukleierungsreagenzien oder als Wirkstoff- oder Katalysatorträger dienen.

DE 100 30 869 A1 beschreibt ein Verfahren zur Herstellung von mehrfunktionellen Polyisocyanat-Polyadditionsprodukten, umfassend
(i) Herstellen eines Additionsproduktes (A) durch Umsetzen einer
   a) mit Isocyanatgruppen reaktiven, mindestens trifunktionellen Komponente (a1) oder einer mit Isocyanatgruppen reaktiven difunktionellen Komponente (a2) oder mit einem Gemisch aus den Komponenten (a1) und (a2) mit
   b) Di- oder Polyisocyanat,
      wobei das Umsetzungsverhältnis so gewählt wird,
      dass im Mittel das Additionsprodukt (A) eine Isocyanatgruppe und mehr als eine mit Isocyanatgruppen reaktive Gruppe enthält,
(ii) gegebenenfalls intermolekulare Additionsreaktion des Additionsprodukts (A) zu einem Polyadditionsprodukt (P), das im Mittel eine Isocyanatgruppe und mehr als zwei mit Isocyanatgruppen reaktive Gruppen enthält und
(iii) Umsetzen des Additionsproduktes (A) oder des Polyadditionsproduktes (P) mit einer mindestens difunktionellen, mit Isocyanatgruppen reaktiven Komponente (c).

Als Beispiele für die Verbindung (a) werden u. a. Glycerin, Trimethylolmethan und 1,2,4-Butantriol genannt. Ein bevorzugtes Diisocyanat (b) ist Isophorondiisocyanat.

Die durch das Verfahren erhältlichen Polyisocyanat-Polyadditionsprodukte werden insbesondere zur Herstellung von Lacken, Überzügen, Klebstoffen, Dichtmassen, Gießelastomeren und Schaumstoffen vorgeschlagen.

WO 2004/101624 offenbart die Herstellung von dendritischen oder hyperverzweigten Polyurethanen durch
1) Umsetzung von Di- oder Polyolen, die mindestens ein tertiäres Stickstoffatom und mindestens zwei Hydroxylgruppen mit unterschiedlicher Reaktivität gegenüber Isocyanatgruppen aufweisen, mit Di- oder Polyisocyanaten, wie z. B. Isophorondiisocyanat, zu einem Additionsprodukt, wobei die Di- oder Polyole und Di- oder Polyisocyanate so gewählt werden, dass das Additionsprodukt im Mittel eine Isocyanatgruppe und mehr als eine Hydroxylgruppe oder eine Hydroxylgruppe und mehr als eine Isocyanatgruppe aufweist,
2) Umsetzung des Additionsproduktes aus Schritt 1) zu einem Polyadditionsprodukt durch intermolekulare Umsetzung der Hydroxylgruppen mit den Isocyanatgruppen, wobei zunächst auch mit einer mindestens zwei Hydroxylgruppen, Mercaptogruppen, Aminogruppen oder Isocyanatgruppen enthaltenden Verbindung umgesetzt werden kann,
3) gegebenenfalls Umsetzung des Polyadditionsproduktes aus Schritt 2) mit einer mindestens zwei Hydroxylgruppen, Mercaptogruppen, Aminogruppen oder Isocyanatgruppen enthaltenden Verbindung.

Die durch das Verfahren erhältlichen Polyaminourethane werden als Vernetzer für Polyurethansysteme oder als Baustein für andere Polyadditions- oder Polykondensationspolymere, als Phasenvermittler, als Rheologiehilfsmittel, als Thixotropiermittel, als Nukleierungsreagenz oder als Wirkstoff- oder Katalysatorträger vorgeschlagen.

WO 02/068553 A2 beschreibt eine Beschichtungszusammensetzung, enthaltend
1) ein Carbamat-Harz mit einem hyperverzweigten oder sternförmigen Polyol-Kern, mit einem ersten Kettenstück auf Basis einer Polycarbonsäure oder eines Polycarbonsäureanhydrids, mit einem zweiten Kettenstück auf Basis eines Epoxids und mit Carbamat-Gruppen am Kern und/oder dem zweiten Kettenstück und
2) ein zweites Harz, das reaktive Gruppen aufweist, die mit den Carbamatgruppen des Carbamat-Harzes reagieren können.

Der Polyol-Kern kann durch Umsetzung einer ersten Verbindung, die mehr als 2 Hydroxygruppen enthält, wie z. B. 1,2,6-Hexantriol, mit einer zweiten Verbindung, die eine Carboxyl- und mindestens zwei Hydroxygruppen enthält, erhalten werden.

Die Einführung der Carbamat-Gruppen kann durch Umsetzung mit aliphatischen oder cycloaliphatischen Diisocyanaten erreicht werden. Im Rahmen einer längeren Aufzählung werden hierbei u. a. 2,2,4- und 2,4,4-Trimethyl-1,6-diisocyanatohexan und Isophorondiisocyanat genannt.

WO 97/02304 betrifft hochfunktionalisierte Polyurethane, die aus Molekülen mit den funktionellen Gruppen A(B)ₙ aufgebaut sind, wobei A eine NCO-Gruppe oder eine mit einer NCO-Gruppe reaktive Gruppe, B eine NCO-Gruppe oder eine mit einer NCO-Gruppe reaktive Gruppe, A reaktiv mit B sowie n eine natürliche Zahl und mindestens gleich 2 ist. Die Herstellung des Monomers A(B)ₙ kann beispielsweise ausgehend von Isophorondiisocyanat erfolgen.

Das Leistungsvermögen der vorstehenden Polymere ist jedoch für viele Anwendungen noch nicht ausreichend, oftmals werden unter Verwendung dieser Polymere eine zu geringe Kratzfestigkeit, eine zu geringe Flexibilität, eine zu geringe Chemikalienbeständigkeit, eine zu hohe Permeabilität und/oder ein zu hoher Gleitwert erhalten.

In Anbetracht dieses Standes der Technik war es Aufgabe der vorliegenden Erfindung, hyperverzweigte Polymere mit einem verbesserten Leistungsprofil bereitzustellen, welche vorzugsweise dazu eingesetzt werden können, mindestens eins, besonders bevorzugt möglichst viele der folgenden Ziele zu erreichen:
⇒ eine möglichst hohe Kratzfestigkeit,
⇒ eine möglichst hohe Flexibilität,
⇒ eine möglichst hohe Chemikalienbeständigkeit,
⇒ eine möglichst geringe Permeabilität,
⇒ einen möglichst geringen Gleitwert.

Die hyperverzweigten Polymere sollten auf möglichst einfache Art und Weise großtechnisch herstellbar sein. Weiterhin sollten besonders günstige Anwendungsgebiete der hyperverzweigten Polymere aufgezeigt werden.

Gelöst werden diese Aufgaben sowie weitere, die zwar nicht explizit genannt werden, sich aber aus den hierin diskutierten Zusammenhängen wie selbstverständlich ableiten lassen oder sich aus diesen zwangsläufig ergeben, durch das in Anspruch 1 beschriebene hyperverzweigte Polyurethan. Zweckmäßige Abwandlungen dieses Polyurethans werden in den auf diese Ansprüche rückbezogenen Unteransprüchen unter Schutz gestellt. Die weiteren Ansprüche beschreiben besonders geeignete Anwendungsgebiete des erfindungsgemäßen hyperverzweigten Polyurethans.

Gegenstand der vorliegenden Erfindung ist deshalb ein hyperverzweigtes Polyurethan, welches durch Umsetzung eines Di- oder Polyisocyanats mit einem Triol der Formel (1) 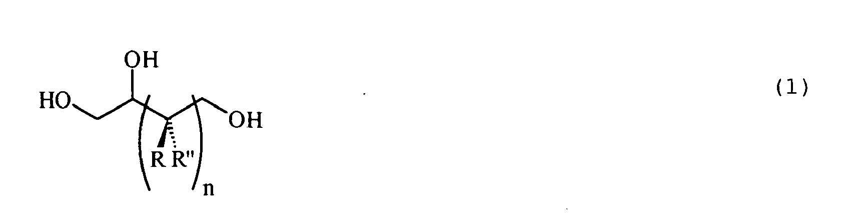 wobei R und R", jeweils unabhängig voneinander, Wasserstoff oder eine Alkylgruppe mit 1 bis 4 Kohlenstoffatomen sind und wobei n eine ganze Zahl größer 2 bedeutet,
und ggf. mit mindestens einem weiteren Di- oder Polyol erhältlich ist,
wobei das Polyurethan im Zahlenmittel mindestens 4 Wiederholungseinheiten der Formel (2) pro Molekül aufweist.

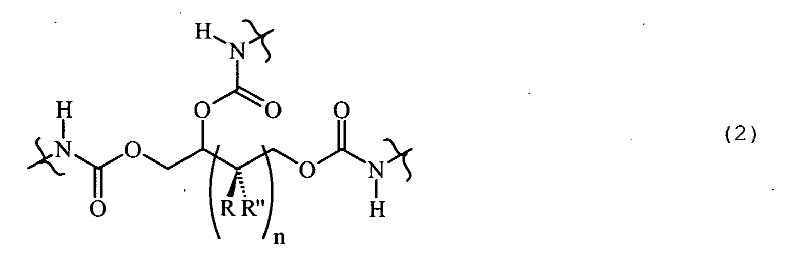

Durch die Bereitstellung des erfindungsgemäßen hyperverzweigten Polyurethans gelingt es auf überraschende Art und Weise ein hyperverzweigtes Polymer mit einem deutlich verbesserten Leistungsprofil zugänglich zu machen, das als Additiv in den entsprechenden Zusammensetzungen eine wesentliche Verbesserung
⇒ der Kratzfestigkeit,
⇒ der Flexibilität,
⇒ der Chemikalienbeständigkeit,
⇒ der Permeabilität und/oder
⇒ des Gleitwerts ermöglicht.

Gleichzeitig ist das erfindungsgemäße hyperverzweigte Polyurethan auf einfache Art und Weise, großtechnisch und vergleichsweise kostengünstig zugänglich.

Hochverzweigte, globularen Polymere werden in der Fachliteratur auch als "dendritische Polymere" bezeichnet. Diese aus multifunktionellen Monomeren synthetisierten dendritischen Polymere lassen sich in zwei unterschiedliche Kategorien einteilen, die "Dendrimere" sowie die "hyperverzweigten Polymere". Dendrimere besitzen einen sehr regelmäßigen, radialsymmetrischen Generationenaufbau. Sie stellen monodisperse globulare Polymere dar, die - im Vergleich zu hyperverzweigten Polymeren - in Vielschrittsynthesen mit einem hohen Syntheseaufwand hergestellt werden. Dabei ist die Struktur durch drei unterschiedliche Areale charakterisiert: - dem polyfunktionellen Kern, der das Symmetriezentrum darstellt, - verschiedenen wohldefinierten radialsymmetrischen Schichten einer Wiederholungseinheit (Generation) und - den terminalen Gruppen. Die hyperverzweigten Polymere sind im Gegensatz zu den Dendrimeren polydispers und hinsichtlich ihrer Verzweigung und Struktur unregelmäßig. Neben den dendritischen und terminalen Einheiten treten - im Gegensatz zu Dendrimeren - in hyperverzweigten Polymeren auch lineare Einheiten auf. Jeweils ein Beispiel für ein Dendrimer und ein hochverzweigtes Polymer, aufgebaut aus Wiederholungseinheiten, welche jeweils mindestens drei Bindungsmöglichkeiten aufweisen, ist in den nachfolgenden Strukturen gezeigt: 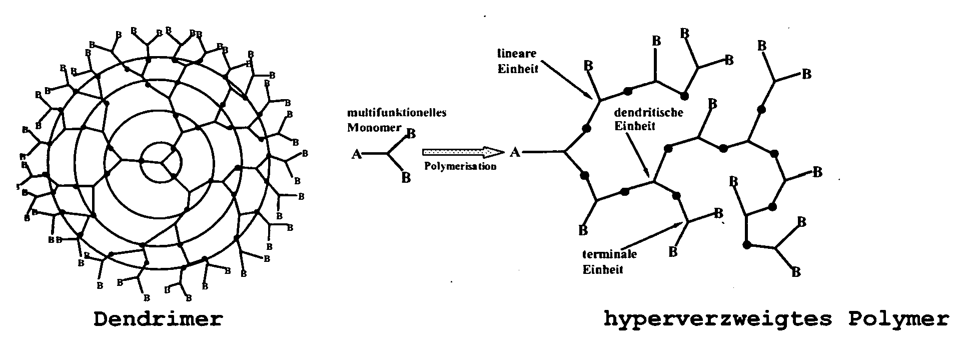 Bezüglich der unterschiedlichen Möglichkeiten zur Synthese von Dendrimeren und hyperverzweigten Polymeren sei insbesondere auf
a) Fréchet J. M. J., Tomalia D.A. "Dendrimers And Other Dendritic Polymers" John Wiley &Sons, Ltd., West Sussex, UK 2001 sowie
b) Jikei M., Kakimoto M. "Hyperbranched Polymers: A Promising New Class Of Materials" Prog. Polym. Sci., 26 (2001) 1233-1285 und/oder
c) Gao C., Yan D. "Hyperbranched Polymers: From Synthesis To Applications" Prog. Polym. Sci., 29 (2004) 183-275
verwiesen, die hiermit als Referenzen eingeführt werden und als Teil der Offenbarung der vorliegenden Erfindung gelten.

Die vorliegende Erfindung betrifft ein hyperverzweigtes Polyurethan, welches durch Umsetzung eines Di- oder Polyisocyanats mit einem Triol der Formel (1) erhältlich ist.

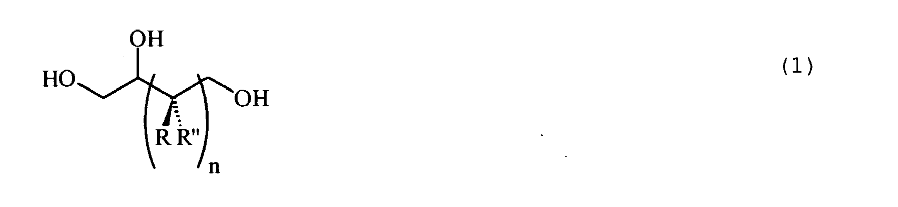

Dabei sind die Reste R und R", jeweils unabhängig voneinander, Wasserstoff oder eine Alkylgruppe mit 1 bis 4 Kohlenstoffatomen, vorzugsweise Methyl, Ethyl, n-Propyl, iso-Propyl, n-Butyl, 2-Butyl, tert. Butyl. Im Rahmen einer ganz besonders bevorzugten Ausführungsform der vorliegenden Erfindung sind R und R" Wasserstoff.

n steht für eine ganze Zahl größer 2, besonders bevorzugt im Bereich von 3 bis 10. Gemäß einer besonders bevorzugten Variante der Erfindung ist n 3.

Das hyperverzweigte Polyurethan zeichnet sich weiterhin dadurch aus, dass es im Zahlenmittel mindestens 4, vorzugsweise mindestens 50, besonders bevorzugt mindestens 200, ganz besonders bevorzugt mindestens 400, Wiederholungseinheiten der Formel (2) pro Molekül aufweist.

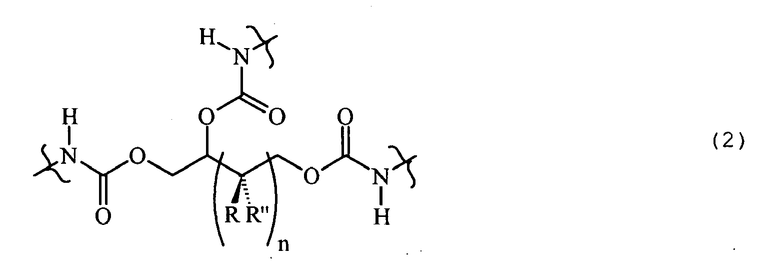

Die Obergrenze an Wiederholungseinheiten der Formel (2) liegt günstigerweise bei 10 000, bevorzugt bei 5 000 und insbesondere bei 2 500 Wiederholungseinheiten, jeweils auf das Zahlenmittel bezogen.

Die erfindungsgemäß eingesetzten Di- und Polyisocyanate können aus beliebigen aromatischen, aliphatischen, cycloaliphatischen und/oder (cyclo)aliphatischen Di- und/oder Polyisocyanaten bestehen.

Als aromatische Di- oder Polyisocyanate sind prinzipiell alle bekannten Verbindungen geeignet. Besonders geeignet sind 1,3- und 1,4-Phenylendiisocyanat, 1,5-Naphthylen-diisocyanat, Tolidindiisocyanat, 2,6-Toluylendiisocyanat, 2,4-Toluylendiisocyanat (2,4-TDI), 2,4'-Diphenylmethandiisocyanat (2,4'-MDI), 4,4'-Diphenylmethandiisocyanat, die Mischungen aus monomeren Diphenylmethandiisocyanaten (MDI) und oligomeren Diphenylmethandiisocyanaten (Polymer-MDI), Xylylendiisocyanat, Tetramethylxylylendiisocyanat und Triisocyanatotoluol.

Geeignete aliphatische Di- oder Polyisocyanate besitzen vorteilhafterweise 3 bis 16 Kohlenstoffatome, vorzugsweise 4 bis 12 Kohlenstoffatome, im linearen oder verzweigten Alkylenrest und geeignete cycloaliphatische oder (cyclo)aliphatische Diisocyanate vorteilhafterweise 4 bis 18 Kohlenstoffatome, vorzugsweise 6 bis 15 Kohlenstoffatome, im Cycloalkylenrest. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI. Beispiele sind Cyclohexandiisocyanat, Methylcyclohexandiisocyanat, Ethylcyclohexandiisocyanat, Propylcyclohexandiisocyanat, Methyldiethylcyclohexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanate.

Bevorzugt werden Isophorondiisocyanat (IPDI), Hexamethylendiisocyanat (HDI), Diisocyanatodicyclohexylmethan (H12MDI), 2-Methylpentandiisocyanat (MPDI), 2,2,4-Trimethylhexamethylendiisocyanat/2,4,4-Trimethylhexamethylen-diisocyanat (TMDI), Norbornandiisocyanat (NBDI). Ganz besonders bevorzugt werden IPDI, HDI, TMDI und H₁₂MDI eingesetzt, wobei auch die Isocyanurate einsetzbar sind.

Ebenfalls geeignet sind 4-Methyl-cyclohexan-1,3-diisocyanat, 2-Butyl-2-ethylpentamethylendiisocyanat, 3(4)-Isocyanatomethyl-1-methylcyclohexyl-isocyanat, 2-Isocyanatopropylcyclohexylisocyanat, 2,4'-Methylen-bis(cyclohexyl)diisocyanat, 1,4-Diisocyanato-4-methyl-pentan.

Selbstverständlich können auch Gemische der Di- und Polyisocyanate eingesetzt werden.

Weiterhin werden vorzugsweise Oligo- oder Polyisocyanate verwendet, die sich aus den genannte Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Besonders geeignet sind Isocyanurate, insbesondere aus IPDI und HDI.

Bevorzugte Triole der Formel (1) umfassen insbesondere 1,2,5-Pentandiol, 1,2,6-Hexantriol, 1,2,7-Heptantriol, 1,2,8-Oktantriol, 1,2,9-Nonantriol und 1,2,10-Decantriol, wobei 1,2,6-Hexantriol ganz besonders bevorzugt wird.

Gemäß einer besonders bevorzugten Ausführungsform der vorliegenden Erfindung ist das Polyurethan erhältlich durch Umsetzung eines Di- oder Polyisocyanats mit einem Triol der Formel (1) und mindestens einem Diol. In diesem Zusammenhang besonders günstige Diole umfassen Ethylenglykol, Diethylenglykol, Triethylenglykol, Polyethylenglykol, Propylenglykol, Dipropylenglykol, Tripropylenglykol, Polypropylenglykol, 1,2-Propandiol, 1,2- Butandiol und/oder 1,3-Butandiol.

Die Mischung aus Triol der Formel (1) und Diol enthält, jeweils bezogen auf ihr Gesamtgewicht, vorzugsweise 50,0 Gew.-% bis < 100,0 Gew.-% Triol der Formel (1) und > 0,0 Gew.-% bis 50,0 Gew.-% Diol, besonders bevorzugt 50,0 Gew.-% bis 75,0 Gew.-% Triol der Formel (1) und 25,0 Gew.-% bis 50,0 Gew.-% Diol.

Das erfindungsgemäße hyperverzweigte Polyurethan hat vorzugsweise ein Gewichtsmittel des Molekulargewichts Mw im Bereich von 1 000 g/mol bis 200 000 g/mol, günstigerweise im Bereich von 1 500 g/mol bis 100 000 g/mol, besonders bevorzugt im Bereich von 2 000 g/mol bis 75 000 g/mol, insbesondere im Bereich von 2 500 g/mol bis 50 000 g/mol.

Die Ermittlung des Molekulargewichts, insbesondere die Bestimmung des Gewichtsmittels des Molekulargewichts Mw und des Zahlenmittels des Molekulargewichts, kann auf an sich bekannte Weise, z. B. mittels Gelpermationschromatographie (GPC) gemessen werden, wobei die Messung vorzugsweise in DMF erfolgt und als Referenz bevorzugt Polyethylenglykole eingesetzt werden (vgl. u. a. Burgath et. al in Macromol. Chem. Phys., 201 (2000) 782-791). Hierbei wird zweckmäßigerweise eine Kalibierkurve eingesetzt, die günstigerweise unter Verwendung von Polystyrol-Standards erhalten wurde. Diese Größen stellen daher apparente Meßwerte dar. Alternativ kann das Zahlenmittel des Molekulargewichts auch durch Dampf- oder Membranosmose bestimmt werden, die z. B. in K. F. Arndt; G. Müller; Polymercharakterisierung; Hanser Verlag 1996 (Dampdruckosmose) und H.-G. Elias, Makromoleküle Struktur Synthese Eigenschaften, Hütig & Wepf Verlag 1990 (Membranosmose) näher beschrieben werden. Die GPC hat sich erfindungsgemäß jedoch ganz besonders bewährt.

Die Polydispersität Mw/Mn bevorzugter hyperverzweigter Polyurethane liegt vorzugsweise im Bereich von 1 - 50, günstigerweise im Bereich von 1,1 - 40, insbesondere im Bereich von 1,2 - 20, bevorzugt bis 10.

Die Viskosität der hyperverzweigten Polyurethane ist vorzugsweise kleiner 10 000 Pas, bevorzugt kleiner 5 000 Pas, besonders bevorzugt kleiner 1 000 Pas. Sie wird zweckmäßigerweise gemäß DIN 53018, bevorzugt bei 150 °C und einer Scherrate von 30 Hz zwischen zwei 20 mm Platten gemessen.

Der Verzweigungsgrad des hyperverzweigten Polyurethans liegt zweckmäßigerweise im Bereich von > 10,0 % bis < 85,0 %, bevorzugt im Bereich von > 20,0 % bis 75,0 %, insbesondere im Bereich von > 25,0 % bis 65,0 %.

Der Verzweigungs grad kann gemäß Frey bestimmt werden. Eine genaue Beschreibung dieser Methoden ist in D. Hölter, A. Burgath, H. Frey, Acta Polymer, 1997, 48, 30 und H. Magnusson, E. Malmström, A. Hult, M. Joansson, Polymer 2002, 43, 301 zu finden.

Weiterhin weist das hyperverzweigte Polyurethan vorzugsweise eine mittels DSC bestimmte Glasübergangstemperatur oder Schmelztemperatur kleiner 300 °C, bevorzugt kleiner 250 °C, insbesondere kleiner 200 °C, auf.

Zur Bestimmung der Schmelz- und der Glasübergangstemperatur hat sich die Verwendung einer Mettler DSC 27 HP mit einer Heizrate von 10 °C/min als besonders günstig erwiesen.

Bei der Herstellung kann das Molekulargewicht des hyperverzweigten Polyurethans durch den relativen Anteil der Monomere gesteuert werden. Um möglichst hohe Molekulargewichte zu erhalten wählt man das Einsatzverhältnis von Di- oder Polyisocyanaten zu Triol der Formel (1) unter Berücksichtigung ggf. vorhandener weiterer Comonomere vorzugsweise derart, dass das Verhältnis (in mol) der reaktiven Gruppen zueinander, d. h. das Verhältnis der Isocyanat-Gruppen zu den Hydroxylgruppen möglichst nahe 1, vorzugsweise im Bereich von 5 : 1 bis 1 : 5, bevorzugt im Bereich von 4 : 1 bis 1 : 4, besonders bevorzugt im Bereich von 2 : 1 bis 1 : 2, noch mehr bevorzugt im Bereich von 1,5 : 1 bis 1 : 5,1 und insbesondere im Bereich von 1,01 : 1 bis 1 : 1,01 ist.

Die Umsetzung der Monomere zum gewünschten hyperverzweigten Polyurethan kann einstufig oder auch mehrstufig (schrittweise) erfolgen. Bei der mehrstufigen Vorgehensweise wird vorzugsweise zunächst ein Monomer vorgelegt und das zweite Monomer schrittweise zugegeben und/oder die Reaktionstemperatur schrittweise oder kontinuierlich erhöht.

Vorzugsweise erfolgt die Umsetzung bei einer Temperatur im Bereich von -80 °C bis 180 °C, bevorzugt bei -40 °C bis 150 °C.

Man kann die Umsetzung der Monomere in Abwesenheit von Katalysatoren durchführen. Vorzugsweise arbeitet man jedoch in Gegenwart von mindestens einem Katalysator.

Dabei werden für die Herstellung der Polyurethane vorzugsweise Amine, Ammoniumverbindungen, Aluminium-, Zinn-, Titan-, Zirkon-, oder Wismutorganische Verbindungen als Katalysatoren eingesetzt. In diesem Zusammenhang haben sich Diazabicyclooctan (DABCO), Diazabicyclononen (DBN) und Diazabicycloundecen (DBU), Titantetrabutylat, Dibutylzinndilaurat, Zirkonacetylacetonat sowie Gemische davon ganz besonders bewährt.

Die Zugabe des Katalysators erfolgt günstigerweise in einer Menge von 50 bis 10 000, bevorzugt von 100 bis 5 000 Gew.-ppm bezogen auf die Menge des eingesetzten Triols der Formel (1).

Zum Abbruch der intermolekularen Polyadditionsreaktion gibt es verschiedene Möglichkeiten. Beispielsweise kann die Temperatur auf einen Bereich abgesenkt werden, in dem die Additionsreaktion zum Stillstand kommt und das Polyadditionsprodukt lagerstabil ist.

Zum Abbruch der Polyadditionsreaktion wird in einer bevorzugten Ausführung eine mindestens difunktionelle, mit Isocyanaten reaktive Komponente zugegeben. In einer weiteren Ausführungsform geschieht der Abbruch der Polyadditionsreaktion durch Zugabe einer monofunktionellen mit NCO- und/oder Hydroxyl-Gruppen reaktiven Komponente.

Die Umsetzung der Monomere kann in Substanz oder in Gegenwart eines Lösemittels durchgeführt werden. Als Lösemittel geeignet sind im allgemeinen solche, die gegenüber den jeweiligen Edulten inert sind. Kohlenwasserstoffe, wie Paraffine oder Aromaten. Besonders geeignete Paraffine sind n-Heptan und Cyclohexan. Besonders geeignete Aromaten sind Benzol, Toluol, ortho-Xylol, meta-Xylol, para-Xylol, Xylol als Isomerengemisch, Ethylbenzol, Chlorbenzol und ortho- und meta-Dichlorbenzol. Weiterhin geeignet sind Ether, beispielsweise Diethylethre, Dioxan oder Terahydrofuran und Ketone wie bspw. Aceton, Methylethylketon und Methylisobutylketon. Weitere bevorzugte Lösungsmittel umfassen Essigester, Butylacetat, Methoxyethylacetat, Methoxypropylacetat, Dimethylformamid, Dimethylacetamid, N-Methylpyrrolidon und Solventnaphtha.

Die Menge an zugesetztem Lösemittel beträgt erfindungsgemäss mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%.

In einer bevorzugten Ausführungsform wird die Reaktion frei von Lösungsmittel durchgeführt.

Die Herstellung des erfindungsgemäßen hyperverzweigten Polyurethans erfolgt bevorzugt in einem Druckbereich von 2 mbar bis 20 bar, bevorzugt bei Normaldruck, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

Das durch das erfindungsgemäße Verfahren erhaltene hyperverzweigte Polyurethan kann bei Bedarf auch hydrophobiert, hydrophiliert oder umfunktionalisiert werden. Dazu können die OH-terminierten Produkte z. B. mit gesättigten oder ungesättigten Carbonsäuren oder deren gegenüber OH-Gruppen reaktiven Derivaten, Sulfonsäuren oder deren gegenüber OH-Gruppen reaktiven Derivaten oder Isocyanatgruppen enthaltenden Verbindungen umgesetzt oder teilumgesetzt werden.

Hydroxyl-terminierte Polymere lassen sich durch Umsetzung mit Monocarbonsäuren, beispielsweise Fettsäuren, Fluorcarbonsäuren oder Monoisocyanaten inertisieren und/oder durch Acrylsäure oder Methacrylsäure funktionalisieren. Weiterhin können dazu die entsprechenden Carbonsäurederivate wie Anhydride und Ester, bevorzugt Methyl- und Ethyl-Ester verwendet werden. Durch Addition von Alkylenoxiden, wie Ethylenoxid, Propylenoxid und/oder Butylenoxid sowie Mischungen derselben lassen sie sich kettenverlängern.

Falls erforderlich lassen sich die funktionellen Gruppen der erfindungsgemäßen Polymere in einem weiteren Schritt modifizieren oder inertisieren. So lassen sich NCO-terminierte Polymere beispielsweise mit Fettalkoholen, Fluoralkoholen, Fettaminen oder Acrylatgruppen enthaltenen Monoalkoholen, wie Hydroxyethylacrylat oder Hydroxymethylmethacrylat ganz oder teilweise umsetzen.

Weiterhin bevorzugte Endgruppenmodifizierungen beinhalten Amin-, Epoxid-, Acrylat-, Methacrylat-, Vinyl-, Silan- und Acetoacetat-Gruppen.

Gemäß einem ganz besonderen Aspekt der vorliegenden Erfindung werden die erfindungsgemäßen Polyurethane zur Herstellung von Polyadditions- und/oder Polykondensationsprodukten, besonders bevorzugt von Polycarbonaten, Polyurethanen, Polyethern und Polyamiden sowie Mischungen derselben verwendet. Sie werden insbesondere als multifunktionaler Kern für den Aufbau höhermolekularer Polymere genutzt. So lassen sich beispielsweise durch Zugabe von mindestens bifunktionalen Komponenten, die mit NCO- oder Hydroxyl-Gruppen reaktive Gruppen enthalten, so genannte "Sternpolymere" erhalten.

Beispielsweise kann nach Modifizierung der Hydroxyl-terminierten erfindungsgemäßen Polyadditionsprodukte mit 2-Brompropionsäure-methylester oder α-Bromisobuttersäuremethylester ein "Makroinitiator" für die Polymerisation von beispielsweise Methacrylaten oder Styrol mittels ATRP (Atom transfer radical polymerization) erhalten werden.

Weitere Beispiele, die nicht als Einschränkung der Systematik zu verstehen sind, sind, ausgehend von einem erfindungsgemäßen Hydroxyl-terminierten hyperverzweigten Polymer, die ringöffnende Polymerisation von beispielsweise ε-Caprolacton oder Tetrahydrofuran zu sternförmigen Makromolekülen.

In einer weiteren bevorzugten Ausführung lässt sich durch die Addition ionischer Verbindungen an die NCO- oder Hydroxyl-Gruppen unter anderem die Löslichkeit der erfindungsgemäßen Polyurethane in polaren Lösungsmitteln erheblich steigern.

Die erfindungsgemäßen hyperverzweigten Polyurethane eignen sich insbesondere für Beschichtungen, Folien und Überzüge mit einer verbesserten Sperrwirkung gegen Gas- und Flüssigkeitspermeation, verbesserten mechanischen Eigenschaften, einer verbesserten Kratzfestigkeit, Abriebbeständigkeit, Chemikalienbeständigkeit und/oder verbesserten easy-to-clean Eigenschaften. Sie werden daher bevorzugt in Beschichtungen, Lacken, Folien und Überzügen verwendet. Weitere besonders bevorzugte Anwendungsgebiete umfassen Klebstoffe, Dichtmassen, Gießelastomere, Schaumstoffe und Formmassen, die Herstellung von Polyadditions- und/oder Polykondensationsprodukten sowie die Verwendung der hyperverzweigten Polyurethane als Trägermolekül, insbesondere für Wirkstoffe und aktive Substanzen, als Extraktionsmittel, als Formmasse, als Folie oder als Verbundwerkstoff.

Zur Beurteilung der Eignung der erfindungsgemäßen Polyurethane haben sich die folgenden Verfahren besonders bewährt.

### 1) Kratzfestigkeit

Kratzfestigkeit ist die Widerstandsfähigkeit einer Oberfläche gegenüber sichtbaren, linienförmigen Beschädigungen durch sich bewegende, die Oberfläche berührende, harte Körper. Zur Beurteilung der Kratzfestigkeit polymerer Matrices kann u. a. die nach Buchholz gemessene Eindruckhärte (DIN 2851) und die Prüfung mit dem Härteprüfstab (Typ 318) der Firma Erichsen dienen. Der Kratztest mit dem Härteprüfstab (Typ 318) der Firma Erichsen wurde mit der Gravierspritze Nummer 4 (nach Opel - 0,5 mm Durchmesser, spezielle Spitzengeometrie und Länge) unter Verwendung der 0 bis 10 [N] Feder der Firma Erichsen durchgeführt. Eine weitere Möglichkeit zur Bestimmung der Härte einer polymeren Matrix ist die so genannte Bleistifthärte (ASTM D 3363).

### 2) Gleitwert

Zur Messung des Gleitwertes dient ein speziell umgebautes elektromotorisches Filmaufziehgerät. Auf der beweglichen Rakelhalterung ist anstelle des eingelegten Filmziehrakels eine Platte montiert, die am anderen Ende des Gerätes auf Rollen liegt. Mit Hilfe der Rakelhalterung kann die Platte, auf der die zu messende Probe befestigt wird, bewegt werden. Ein Klotz einer flächigen Filzunterlage wird auf dem Probenkörper gesetzt und mit 500 g beschwert. Der auf der Platte befindliche Probenkörper wird mit einer Geschwindigkeit von 12 mm/s unter dem Gewicht weggezogen. Die hierfür notwendige, vertikale Kraft wird gemessen und als Gleitwert bezeichnet. Die Ermittlung des Gleitwertes erfolgt 24 Stunden nach Aushärtung der Oberflächenbeschichtung.

### 3) Flexibilität

Die Elastizität einer polymeren Matrix kann u.a. durch Bestimmung der Tiefung nach DIN 1520, des Kugelschlags nach ASTM D 2794-93 sowie der Pendelhärte nach DIN 1522 beurteilt werden.

### 4) Chemikalienbeständigkeit

Die Chemikalienbeständigkeit einer polymeren Oberfläche kann u. a. nach ASTM D 4752 bestimmt werden.

### 5) Permeabilität

Die Sauerstoffpermeabilität kann mit einer modifizierten ASTM (American Society for Testing and Materials) -Standardmethode D3985-81 gemessen werden. Die Wasserdampfpermeabilität kann gravimetrisch mit der ASTM-Standardmethode E-96 bestimmt werden.

Allgemeine Versuchsbeschreibung:
Das Diisocyanat (z.B. Isophorondiisocyanat, IPDI) wird mit einem Triol (z. B. 1,2,6-Hexantriol) zum hyperverzweigten Polyisocyanat umgesetzt. Dazu wird in einem Dreihalskolben, versehen mit Rührer, Innenthermometer, Tropftrichter und Gaseinleitrohr, das Diisocyanat und 0,01 % DBTL 100%ig (berechnet auf gesamt) unter Stickstoffabdeckung vorgelegt. Danach wird das entsprechende Triol, gelöst in N-Methylpyrolidon (NMP) bei 25 °C langsam zugetropft. Nach der Zugabe wird die Temperatur auf 60 °C erhöht. Der Reaktionsverlauf wird mittels Abnahme der NCO-Zahl verfolgt.

### Beispiel 1: Umsetzung (NCO:OH): 2,375 Mol IPDI : 1 Mol 1,2,6-Hexantriol

| | |
|---|---|
| IPDI | 131,81 g |
| 1,2,6-Hexantriol | 33,50 g |
| NMP | 200,00 g |
| Gesamtmenge | 365,31 |

Die Reaktion ist bei einem NCO-Gehalt von 5,02 % abgeschlossen.

### Beispiel 2: Umsetzung (NCO:OH) 2,3 Mol IPDI : 1 Mol 1,2,6-Hexantriol

| | |
|---|---|
| IPDI | 265,50 g |
| 1,2,6-Hexantriol | 69,70 g |
| NMP | 520,00 g |
| Gesamtmenge | 855,20 g |

Die Reaktion ist bei einem NCO-Gehalt von 4,07 % abgeschlossen.

### Beispiel 3: Umsetzung (NCO:OH) 2,275 Mol IPDI : 1 Mol 1,2,6-Hexantriol

| | |
|---|---|
| IPDI | 144,30 g |
| 1,2,6-Hexantriol | 38,29 g |
| NMP | 200,00 g |
| Gesamtmenge | 382,59 g |

Die Reaktion ist bei einem NCO-Gehalt von 4,85 % abgeschlossen.

### Beispiel 4: Umsetzung (NCO:OH) 2,275 Mol IPDI : 0,5 Mol 1,2,6-Hexantriol und 0,5 Mol Trimethylolpropan (TMP)

| | |
|---|---|
| IPDI | 144,30 g |
| TMP | 19,15 g |
| 1,2,6-Hexantriol | 19,15 g |
| NMP | 200,00 g |
| Gesamtmenge | 363,45 g |

Die Reaktion ist bei einem NCO-Gehalt von 4,85 % abgeschlossen.

Hyperverzweigtes Polyisocyanat aus IPDI/Triol/Diol:
Allgemeine Versuchsbeschreibung:
   Das Diisocyanat (z. B. Isophorondiisocyanat, IPDI) wird mit einem Triol (z. B. 1,2,6-Hexantriol) und einem Diol (z. B. 1,6 Hexandiol) zum hyperverzweigten Polyisocyanat umgesetzt. Dazu wird in einem Dreihalskolben, versehen mit Rührer, Innenthermometer, Tropftrichter und Gaseinleitrohr, das Diisocyanat gelöst in Tetrahydrofuran (THF) und 0,01 % DBTL 100%ig (berechnet auf gesamt) unter Stickstoffabdeckung vorgelegt. Danach wird das entsprechende Triol und Diol, gelöst in Tetrahydrofuran (THF) bei 55 °C - 60 °C langsam zugetropft. Nach der Zugabe wird die Temperatur auf 60 °C erhöht. Der Reaktionsverlauf wird mittels Abnahme der NCO-Zahl verfolgt.

### Beispiel 5: Umsetzung (NCO:OH) 2,4 Mol IPDI : 0,9 Mol 1,2,6-Hexantriol und 0,1 Mol 1,6-Hexandiol

| | |
|---|---|
| IPDI | 177,60 g |
| 1,2,6-Hexantriol | 40,20 g |
| 1,6-Hexandiol | 3,93 g |
| THF | 200,00 g |
| Gesamtmenge | 421,73 g |

Die Reaktion ist bei einem NCO-Gehalt von 6,3 % abgeschlossen.

### Beispiel 6: Umsetzung (NCO:OH) 2,4 Mol IPDI : 0,9 Mol 1,2,6-Hexantriol und 0,1 Mol 1,4-Butandiol

| | |
|---|---|
| IPDI | 153,98 g |
| 1,2,6-Hexantriol | 34,87 g |
| 1,4-Butandiol | 2,60 g |
| THF | 156,64 g |
| Gesamtmenge | 348,09 g |

Die Reaktion ist bei einem NCO-Gehalt von 6,6 % abgeschlossen.

### Beispiel 7: Umsetzung (NCO:OH) 2,4 Mol IPDI : 0,9 Mol 1,2,6-Hexantriol und 0,1 Mol 1,2-Ethandiol

| | |
|---|---|
| IPDI | 177,60 g |
| 1,2,6-Hexantriol | 40,20 g |
| 1,2-Ethandiol | 2,07 g |
| THF | 200,00 g |
| Gesamtmenge | 419,87 g |

Die Reaktion ist bei einem NCO-Gehalt von 6,3 % abgeschlossen.

### Beispiel 8: Umsetzung (NCO:OH) 2,4 Mol IPDI : 0,9 Mol 1,2,6-Hexantriol und 0,1 Mol 1,2-Hexandiol

| | |
|---|---|
| IPDI | 177,60 g |
| 1,2,6-Hexantriol | 40,20 g |
| 1,2-Hexandiol | 3,93 g |
| THF | 200,00 g |
| Gesamtmenge | 421,73 g |

Die Reaktion ist bei einem NCO-Gehalt von 6,3 % abgeschlossen.

### Beispiel 9: Umsetzung (NCO:OH) 2,4 Mol IPDI : 0,75 Mol 1,2,6-Hexantriol und 0,25 Mol 1,6-Hexandiol

| | |
|---|---|
| IPDI | 154,7 g |
| 1,2,6-Hexantriol | 29,2 g |
| 1,6-Hexandiol | 8,57 g |
| THF | 157,5 g |
| Gesamtmenge | 394,97 g |

Die Reaktion ist bei einem NCO-Gehalt von 7,1 % abgeschlossen.

Allgemeine Versuchsbeschreibung:
Das Diisocyanat (z. B. Isophorondiisocyanat, IPDI) wird mit einem Triol (z. B. 1,2,6-Hexantriol) und/oder einem Diol (z. B. 1,6-Hexandiol) zum hyperverzweigten Polyisocyanat umgesetzt. Dazu wird in einem Dreihalskolben, versehen mit Rührer, Innenthermometer, Tropftrichter und Gaseinleitrohr, das Triol (Diol) gelöst in Tetrahydrofuran (THF) und 0,01 % DBTL 100%ig (berechnet auf gesamt) unter Stickstoffabdeckung vorgelegt. Danach wird das entsprechende Diisocyanat, gelöst in Tetrahydrofuran (THF) bei 55 °C - 60 °C langsam zugetropft. Nach der Zugabe wird die Temperatur bei 60 °C gehalten. Der Reaktionsverlauf wird mittels Abnahme der NCO-Zahl verfolgt. Nach vollständiger Umsetzung wird eine OH-Zahl bestimmt und das Produkt mittels Rotationsverdampfer und Vakuumtrockenschrank getrocknet.

### Beispiel 10: Umsetzung (NCO:OH): 1,0 Mol IPDI : 1,3 Mol 1,2,6-Hexantriol

| | |
|---|---|
| IPDI | 77,77 g |
| 1,2,6-Hexantriol | 60,97 g |
| THF | 335,00 g |
| Gesamtmenge | 473,74 g |

Die Reaktion ist bei einem NCO-Gehalt von < 0,01 % und einer OH-Zahl von 80 mg KOH/g abgeschlossen.

### Beispiel 11: Umsetzung (NCO:OH): 1,0 Mol IPDI : 1,07 Mol 1,2,6-Hexantriol : 0,13 MOH 1,6-Hexandiol

| | |
|---|---|
| IPDI | 66,60 g |
| 1,2,6-Hexantriol | 43,01 g |
| 1,6-Hexandiol | 4,60 g |
| THF | 250,00 g |
| Gesamtmenge | 364,21 g |

Die Reaktion ist bei einem NCO-Gehalt von <0,01 % und einer OH-Zahl von 66 mg KOH/g abgeschlossen.

### Beispiel 12: Umsetzung (NCO:OH): 1,0 Mol IPDI : 0,96 Mol 1,2,6-Hexantriol : 0,24 MOH 1,6-Hexandiol

| | |
|---|---|
| IPDI | 66,60 g |
| 1,2,6-Hexantriol | 38,59 g |
| 1,6-Hexandiol | 8,50 g |
| THF | 250,00 g |
| Gesamtmenge | 363,69 g |

Die Reaktion ist bei einem NCO-Gehalt von <0,01 % und einer OH-Zahl von 68 mg KOH/g abgeschlossen.

Allgemeine Versuchsbeschreibung:
In einem Dreihalskolben, versehen mit Rührer, Innenthermometer, Tropftrichter und Gaseinleitrohr werden das Diisocyanat, Tetrahydrofuran (THF) und 0,005 DBTL 100%ig (berechnet auf Gesamtmenge) unter Stickstoffabdeckung vorgelegt. Danach wird ein Gemisch aus 1,2,6-Hexantriol und 1,4-Butandiol gelöst in 100 g THF bei 4 °C langsam zugetropft. Nach vollständiger Zugabe wird 2 h bei Raumtemperatur gerührt. Danach wird die Temperatur auf 60 °C erhöht. Der Reaktionsverlauf wird mittels Abnahme der NCO-Zahl verfolgt.

### Beispiel 13: IPDI: Hexantriol (2,4 : 1) Blend mit 1,2-Butandiol (75 : 25)

Umsetzung (NCO:OH): 2.4 Mol IPDI; : 1 Mol 1,2,6-Hexantriol, 1,4-Butandiol

| | |
|---|---|
| IPDI | 533,5 g (in 400 g THF) |
| 1,2,6-Hexantriol | 100,5 g |
| 1,4-Butandiol | 22,5 g |
| Gesamtmenge THF | 500,00 g |
| Gesamtmenge | 1156,5 g |

Die Reaktion ist bei einem NCO-Gehalt von 7,3 % abgeschlossen.

### Beispiel 14: IPDI : H12MDI (75 : 25)

Umsetzung (NCO:OH): 1.875 Mol IPDI, 0.625 Mol H12MDI : 1 Mol 1,2,6-Hexantriol

| | |
|---|---|
| IPDI | 416,4 g (in 300 g THF) |
| H12MDI | 163,8 g (in 300 g THF) |
| 1,2,6-Hexantriol | 134,0 g (in 200 g THF) |
| Gesamtmenge THF | 800,00 g |
| Gesamtmenge | 1514,2 g |

Die Reaktion ist bei einem NCO-Gehalt von 5,5 % abgeschlossen.

### Beispiel 15: IPDI : H12MDI (50 : 50)

Hyperverzweigtes Polymer NCO:
Umsetzung (NCO:OH): 1.2 Mol IPDI, 1.2 Mol H12MDI : 1 Mol 1,2,6-Hexantriol

| | |
|---|---|
| IPDI | 266,4 g (in 300 g THF) |
| H12MDI | 314,4 g (in 300 g THF) |
| 1,2,6-Hexantriol | 134,0 g (in 200 g THF) |
| Gesamtmenge THF | 800,00 g |
| Gesamtmenge | 1514,8 g |

Die Reaktion ist bei einem NCO-Gehalt von 4,97 % abgeschlossen.

## Patentansprüche

1. Hyperverzweigtes Polyurethan, erhältlich durch Umsetzung eines Di- oder Polyisocyanats mit einem Triol der Formel (1) 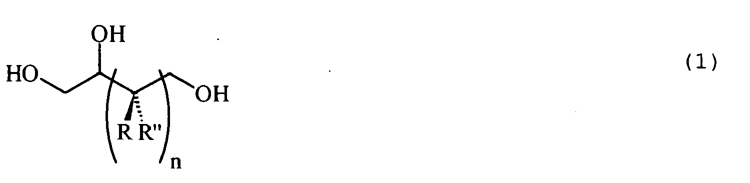 wobei R und R", jeweils unabhängig voneinander, Wasserstoff oder eine Alkylgruppe mit 1 bis 4 Kohlenstoffatomen sind und wobei n eine ganze Zahl größer 2 bedeutet,
und gegebenenfalls mit mindestens einem weiteren Di- oder Polyol,
**dadurch gekennzeichnet, dass**
das Polyurethan im Zahlenmittel mindestens 4 Wiederholungseinheiten der Formel (2) pro Molekül aufweist

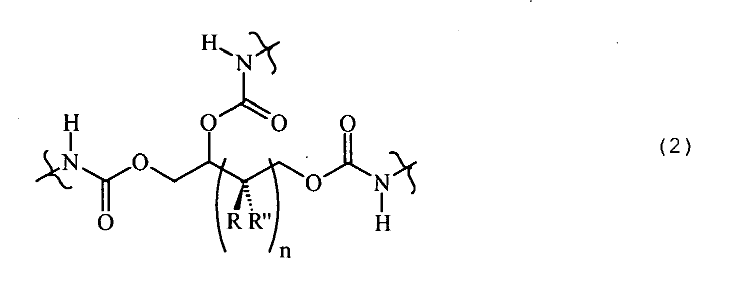

2. Polyurethan nach Anspruch 1, **dadurch gekennzeichnet, dass** n zwischen 3 und 10 ist.

3. Polyurethan nach Anspruch 2, **dadurch gekennzeichnet, dass** n 3 ist und R und R" Wasserstoff bedeuten.

4. Polyurethan nach mindestens einem der vorangehenden Ansprüche, erhältlich aus einem aromatischen, aliphatischen, cycloaliphatischen oder (cyclo)aliphatischen Di- oder Polyisocyanat allein oder in Mischungen und/oder Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen aufweisenden Oligo- und/oder Polyisocyanate.

5. Polyurethan nach Anspruch 4, erhältlich aus Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/ 2,4,4-Trimethylhexamethylendiisocyanat (TMDI), Norbornandiisocyanat (NBDI).

6. Polyurethan nach mindestens einem der vorangehenden Ansprüche, erhältlich durch Umsetzung eines Di- oder Polyisocyanats mit einem Triol der Formel (1) und mindestens einem Diol, ausgewählt aus Ethylenglykol, Diethylenglykol, Triethylenglykol, Polyethylenglykol, Propylenglykol, Dipropylenglykol, Tripropylenglykol, Polypropylenglykol, 1,2-Propandiol, 1,2- Butandiol und 1,3-Butandiol.

7. Polyurethan nach Anspruch 6, erhältlich durch Umsetzung eines Di- oder Polyisocyanats mit einer Mischung, die, jeweils bezogen auf ihr Gesamtgewicht, 50,0 Gew.-% bis < 100,0 Gew.-% Triol der Formel (1) und > 0,0 Gew.-% bis 50,0 Gew.-% Diol enthält.

8. Polyurethan nach mindestens einem der vorangehenden Ansprüche, erhältlich aus einer Monomermischung mit einem molaren Verhältnis von Hydroxylgruppen zu Isocyanatgruppen im Bereich von 5 : 1 bis 1 : 5.

9. Polyurethan nach mindestens einem der vorangehenden Ansprüche mit einem Gewichtsmittel des Molekulargewichts im Bereich von 1 000 bis 200 000g/mol.

10. Polyurethan nach mindestens einem der vorangehenden Ansprüche mit einer Glasübergangstemperatur oder Schmelztemperatur, gemessen durch DSC, kleiner 300 °C.

11. Polyurethan nach mindestens einem der vorangehenden Ansprüche mit einem Verzweigungsgrad DB nach Frey von 10 % < DB < 85,0 %.

12. Polyurethan nach mindestens einem der vorangehenden Ansprüche, **dadurch gekennzeichnet, dass** die Endgruppen des Polymers zumindest teilweise modifiziert sind.

13. Polyurethan nach Anspruch 12, **dadurch gekennzeichnet, dass** die Endgruppen hydrophobiert, hydrophiliert und/oder umfunktionalisiert sind.

14. Polyurethan nach Anspruch 13, **dadurch gekennzeichnet, dass** die Endgruppen mit Fettsäuren, Fettalkoholen, Acrylsäure, Methacrylsäure, Acrylsäureestern und/oder Methacrylsäureestern umgesetzt wurden.

15. Polyurethan nach Anspruch 12, 13 oder 14, **dadurch gekennzeichnet, dass** die Endgruppen mit Polymeren kovalent verbunden sind, die durch Polykondensation, Polyaddition, anionische Polymerisation, kationische Polymerisation, radikalische Polymerisation und/oder ringöffnende Polymerisation erhalten werden können.

16. Verwendung des Polyurethans gemäß mindestens einem der vorangehenden Ansprüche als Bestandteil von Druckfarben, Klebstoffen, Beschichtungen, Lacken, Überzügen, Dichtmassen, Gießelastomeren, Schaumstoffen und Formmassen.

17. Verwendung des Polyurethans gemäß mindestens einem der Ansprüche 1 bis 15 zur Herstellung von Polyadditions- und/oder Polykondensationsprodukten.

18. Verwendung des Polyurethans gemäß mindestens einem der Ansprüche 1 bis 15 als Trägermolekül, als Extraktionsmittel, als Formmasse, als Folie oder als Verbundwerkstoff.

## Claims

1. Hyperbranched polyurethane obtainable by reacting a diisocyanate or polyisocyanate with a triol of the formula (1) 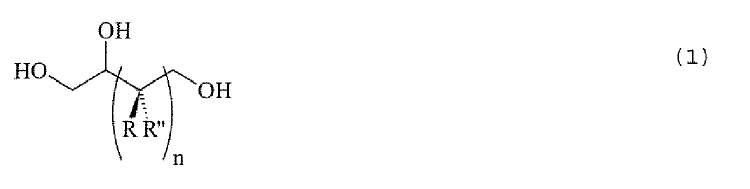 where R and R" each independently of one another are hydrogen or an alkyl group having 1 to 4 carbon atoms and where n is an integer greater than 2,
and if desired with at least one further diol or polyol,
**characterized in that** the polyurethane has a numerical average of at least 4 repeating units of the formula (2) per molecule

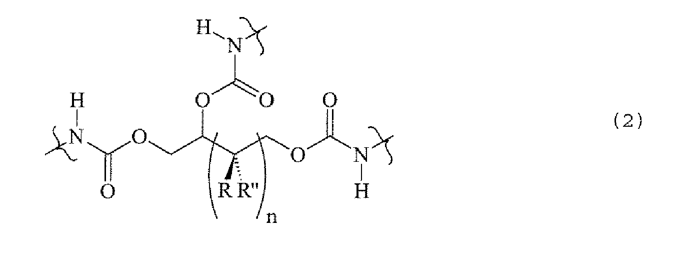

2. Polyurethane according to Claim 1, **characterized in that** n is between 3 and 10.

3. Polyurethane according to Claim 2, **characterized in that** n is 3 and R and R" are hydrogen.

4. Polyurethane according to at least one of the preceding claims, obtainable from an aromatic, aliphatic, cycloaliphatic or (cyclo)aliphatic diisocyanate or polyisocyanate alone or in mixtures and/or oligoisocyanates and/or polyisocyanates containing urethane, allophanate, urea, biuret, uretdione, amide, isocyanurate, carbodiimide, uretonimine, oxadiazinetrione or iminooxadiazinedione structures.

5. Polyurethane according to Claim 4, obtainable from isophorone diisocyanate (IPDI), hexamethylene diisocyanate (HDI), diisocyanatodicyclohexylmethane (H₁₂MDI), 2-methylpentane diisocyanate (MPDI), 2,2,4-trimethylhexamethylene diisocyanate/2,4,4-trimethylhexamethylene diisocyanate (TMDI),
norbornane diisocyanate (NBDI).

6. Polyurethane according to at least one of the preceding claims, obtainable by reacting a diisocyanate or polyisocyanate with a triol of the formula (1) and at least one diol selected from ethylene glycol, diethylene glycol, triethylene glycol, polyethylene glycol, propylene glycol, dipropylene glycol, tripropylene glycol, polypropylene glycol, 1,2-propanediol, 1,2-butanediol and 1,3-butanediol.

7. Polyurethane according to Claim 6, obtainable by reacting a diisocyanate or polyisocyanate with a mixture containing, based in each case on its total weight, 50.0% to < 100.0% by weight of triol of the formula (1) and > 0.0% to 50.0% by weight of diol.

8. Polyurethane according to at least one of the preceding claims, obtainable from a monomer mixture having a molar ratio of hydroxyl groups to isocyanate groups in the range from 5:1 to 1:5.

9. Polyurethane according to at least one of the preceding claims, having a weight-average molecular weight in the range from 1000 to 200 000 g/mol.

10. Polyurethane according to at least one of the preceding claims, having a glass transition temperature or melting temperature, measured by DSC, of less than 300°C.

11. Polyurethane according to at least one of the preceding claims, having a degree of branching, DB, according to Frey of 10% < DB < 85.0%.

12. Polyurethane according to at least one of the preceding claims, **characterized in that** the end groups of the polymer are at least partly modified.

13. Polyurethane according to Claim 12, **characterized in that** the end groups are hydrophobicized, hydrophilicized and/or transfunctionalized.

14. Polyurethane according to Claim 13, **characterized in that** the end groups have been reacted with fatty acids, fatty alcohols, acrylic acid, methacrylic acid, acrylic esters and/or methacrylic esters.

15. Polyurethane according to Claim 12, 13 or 14, **characterized in that** the end groups are covalently bonded to polymers which can be obtained by polycondensation, polyaddition, anionic polymerization, cationic polymerization, free-radical polymerization and/or ring-opening polymerization.

16. Use of the polyurethane according to at least one of the preceding claims as an ingredient of printing inks, adhesives, coatings, varnishes, coverings, sealants, casting elastomers, foams and molding compounds.

17. Use of the polyurethane according to at least one of Claims 1 to 15 for preparing polyaddition products and/or polycondensation products.

18. Use of the polyurethane according to at least one of Claims 1 to 15 as a carrier molecule, as an extractant, as a molding compound, as a film or as a composite material.

## Revendications

1. Polyuréthanne hyper-ramifié, pouvant être obtenu par mise en réaction d'un di- ou polyisocyanate avec un triol de formule (1) 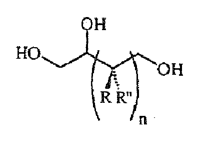 dans laquelle R et R" sont chacun, indépendamment l'un de l'autre, un atome d'hydrogène ou un groupe alkyle ayant de 1 à 4 atomes de carbone et dans laquelle n représente un nombre entier supérieur à 2,
et éventuellement avec au moins un autre diol ou polyol,
**caractérisé en ce que** le polyuréthanne présente en moyenne en nombre au moins 4 motifs répétitifs de formule (2) par molécule

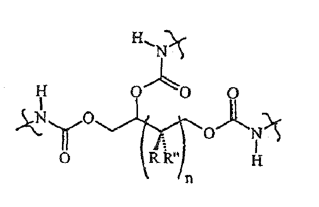

2. Polyuréthanne selon la revendication 1, **caractérisé en ce que** n est compris entre 3 et 10.

3. Polyuréthanne selon la revendication 2, **caractérisé en ce que** n est 3 et R et R" représentent des atomes d'hydrogène.

4. Polyuréthanne selon au moins l'une des revendications précédentes, pouvant être obtenu à partir d'un di- ou polyisocyanate aromatique, aliphatique, cycloaliphatique ou (cyclo)aliphatique, seul ou en mélanges et/ou des oligo- et/ou polyisocyanates comportant des structures uréthanne, allophanate, urée, biuret, urétdione, amide, isocyanurate, carbodiimide, urétonimine, oxadiazinetrione ou imino-oxadioazinedione.

5. Polyuréthanne selon la revendication 4, pouvant être obtenu à partir d'isophorone-diisocyanate (IPDI), d'hexaméthylène-diisocyanate (HDI), de diisocyanatodicyclohexylméthane (H₁₂MDI), de 2-méthylpentanediisocyanate (MPDI), de 2,2,4-triméthyl hexaméthylène-diisocyanate/2,4,4-triméthyl-hexaméthylène-diisocyanate (TMDI), de norbornane-diisocyanate (NBDI).

6. Polyuréthanne selon au moins l'une des revendications précédentes, pouvant être obtenu par réaction d'un di- ou polyisocyanate avec un triol de formule (I) et d'au moins un diol choisi parmi l'éthylèneglycol, le diéthylèneglycol le triéthylèneglycol, le polyéthylèneglycol, le propylèneglycol, le dipropylèneglycol, le tripropylèneglygcol, le polypropylèneglycol, le 1,2-propanediol, le 1,2-butanediol et le 1,3-butanediol.

7. Polyuréthanne selon la revendication 6, pouvant être obtenu par réaction d'un di- ou polyisocyanate avec un mélange qui contient, chaque fois par rapport à son poids total, de 50,0 % en poids à < 100,0 % en poids de triol de formule (1) et de > 0,0 % en poids à 50,0 % en poids de diol.

8. Polyuréthanne selon au moins l'une des revendications précédentes, pouvant être obtenu à partir d'un mélange de monomères ayant un rapport molaire des groupes hydroxy aux groupes isocyanate dans la plage de 5:1 à 1:5.

9. Polyuréthanne selon au moins l'une des revendications précédentes, ayant une moyenne en poids de la masse moléculaire dans la plage de 1 000 à 200 000 g/mole.

10. Polyuréthanne selon au moins l'une des revendications précédentes, ayant une température de transition vitreuse ou une température de fusion, mesurée par ATC (analyse thermique différentielle), inférieure à 300 °C.

11. Polyuréthanne selon au moins l'une des revendications précédentes, ayant un degré de ramification DB selon Frey de 10 % < DB < 85,0 %.

12. Polyuréthanne selon au moins l'une des revendications précédentes, **caractérisé en ce que** les groupes en bout de chaîne du polymère sont au moins partiellement modifiés.

13. Polyuréthanne selon la revendication 12, **caractérisé en ce que** les groupes en bout de chaîne sont rendus hydrophobes, rendus hydrophiles et/ou transformés en une autre fonction.

14. Polyuréthanne selon la revendication 13, **caractérisé en ce que** les groupes en bout de chaîne sont mis en réaction avec des acides gras, des alcools gras, l'acide acrylique, l'acide méthacrylique, des esters d'acide acrylique et/ou des esters d'acide méthacrylique.

15. Polyuréthanne selon la revendication 12, 13 ou 14, **caractérisé en ce que** les groupes en bout de chaîne sont liés par covalence à des polymères qui peuvent être obtenus par polycondensation, polyaddition, polymérisation anionique, polymérisation cationique, polymérisation radicalaire et/ou polymérisation avec ouverture de cycle.

16. Utilisation du polyuréthanne selon au moins l'une des revendications précédentes, en tant que composant d'encres d'impression, d'adhésifs, de revêtements, de peintures, d'enduits, de matériaux d'étanchéité, d'élastomères de coulée, de mousses et de matières à mouler.

17. Utilisation du polyuréthanne selon au moins l'une des revendications 1 à 15, pour la fabrication de produits de polyaddition et/ou polycondensation.

18. Utilisation du polyuréthanne selon au moins l'une des revendications 1 à 15 en tant que molécule d'excipient, en tant qu'agent d'extraction, en tant que matière à mouler, sous forme de film ou de matériau composite.
